# EUROPÄISCHE PATENTSCHRIFT

(11) **EP 1 033 161 B1**
(45) Veröffentlichungstag und Bekanntmachung des Hinweises auf die Patenterteilung: **07.04.2004**
(21) Anmeldenummer: 99123380.0
(22) Anmeldetag: 24.11.1999
(51) Int. Cl.: B01D 53/94, B01J 23/50, F01N 3/08

(54) **Verfahren und Anordnung zur Speicherung von in einem Gas enthaltenen Stickstoffoxiden**
Process and device for adsorption of nitrogen oxides contained in a gas
Procédé et dispositif pour l'adsorption d'oxydes d'azote contenus dans un gaz

(30) Priorität: 25.02.1999 DE 19908023
(43) Veröffentlichungstag der Anmeldung: 06.09.2000
(73) Patentinhaber: DaimlerChrysler AG, 70567 Stuttgart (DE)
(72) Erfinder: Schaeffner, Guido, 88263 Horgenzell (DE); Andorf, Renato, Dr., 88090 Immenstaad (DE); Plog, Carsten, Dr., 88677 Markdorf (DE)

(56) Entgegenhaltungen:
- EP-A- 0 664 147
- EP-A- 0 778 072
- EP-A- 0 890 389
- WO-A-98/56492

## Beschreibung

Die Erfindung betrifft ein Verfahren sowie eine Anordnung zur Speicherung von in einem Gas enthaltenen Stickoxiden (NOx). Bei dem stickoxidhaltigen Gas handelt es sich insbesondere um das Abgas eines Verbrennungsmotors.

Weltweit beschäftigen sich zahlreiche Arbeitsgruppen mit der Entwicklung von Katalysatoren zur Entstickung magermotorischer Abgase. Eine Entwicklungsrichtung, die derzeit sehr intensiv verfolgt wird, liegt in den sogenannten NOx-Speicherkatalysatoren /1,2/, die u.a. im Abgas magermix-betriebener Ottomotoren eingesetzt werden sollen. Die Stickoxide werden dabei im Magerbetrieb des Motors gespeichert und in fetten Betriebsphasen wieder freigesetzt und gleichzeitig an einem konventionellen Dreiwegekatalysator zu N2 umgesetzt. Der Katalysator setzt sich entsprechend aus zwei Materialkomponenten, dem NOx-Speichermaterial und dem Dreiwegekatalysator, zusammen. Das NOx-Speichermaterial speichert die Stickoxide dabei als Nitrate. Als Feststoffkomponenten werden dazu Alkali- und Erdalkaliverbindungen eingesetzt.

Ein entscheidendes Problem, das den Einsatz des NOx-Speicherkatalysators derzeit nicht ermöglicht, ist die unzureichende Resistenz gegen schwefelhaltige Komponenten im Abgas und gegen hohe Temperaturen. Ein weiteres Problem besteht darin, daß dieser Katalysatortyp aufgrund der für die Nitratspeicherung erforderlichen Oxidation des NO zu NO2 erst oberhalb einer bestimmten Temperatur (ca. 200°C) einsetzbar ist. Im gesetzlich vorgeschriebenen Fahrtestzyklus kann daher der Niedertemperaturbereich (in Europa: Kaltstart und ECE) nicht abgedeckt werden.

Ag-haltige Materialien als NOx-Speicherkomponente in derartigen Speicherkatalysatoren wurden bereits als mögliche Alternative vorgeschlagen /3/. Die Fähigkeit Ag-haltiger Feststoffe, Stickoxide (NOx) lambda-abhängig speichern und wieder freisetzen zu können, wird in /3/ ebenfalls beschrieben.

Aufgabe der Erfindung ist es, ein Verfahren zur NOx-Speicherung zu schaffen, mit dem die NOx-Speicherkapazität Ag-haltiger Materialien in kohlenwasserstoffhaltigen Atmosphären erhöht werden kann. Eine Anordnung zur NOx-Speicherung ist ebenfalls Gegenstand der Erfindung.

Die NOx-Beladungskapazität Ag-haltiger Materialien beeinflußt entscheidend die Leistungsfähigkeit des NOx-Speicherkatalysators, in denen diese Materialien als Komponente eingesetzt werden. Laboruntersuchungen zeigen, daß die Beladungskapazität und die Zeit bis zum Durchbruch der Stickoxide des Ag-haltigen Feststoffes vom Kohlenwasserstoffgehalt (Kohlenwasserstoff wird im folgenden auch mit HC abgekürzt) in der vorherrschenden Atmosphäre beeinflußt wird. Hohe Kohlenwasserstoffgehalte führen zu verminderten NOx-Beladungen und verkürzten Durchbruchszeiten. Höchste NOx-Beladung und längste Durchbruchszeiten werden entsprechend nur in HC-freier Atmosphäre erzielt.

Erfindungsgemäß wird zur Erhöhung der NOx-Beladungskapazität und der NOx-Durchbruchszeit des Ag-haltigen Materials in HC-haltigen Atmosphären dieses mit einem katalytisch wirkenden Feststoff mit Oxidationseigenschaften (im folgenden auch Oxidationskatalysator genannt) kombiniert. Dabei wird dem Ag-haltigen Feststoff (im folgenden auch NOx-Speicherkomponente genannt) ein katalytisch wirkender Feststoff mit Oxidationseigenschaften vorgeschaltet. Der Ausdruck 'vorgeschaltet' ist dabei in zeitlichem Sinn zu verstehen, d.h. das NOx-haltige Gas wird zuerst an den Katalysator mit Oxidationseigenschaften geführt und erst danach an den Ag-haltigen Feststoff.

Der Oxidationskatalysator bewirkt die Verbrennung der Kohlenwasserstoffe zu Kohlendioxid und Wasser, so daß das Gas nach Passieren des Oxidationskatalysators im wesentlichen HC-frei ist.

Am Oxidationskatalysator erfolgt neben der Kohlenwasserstoffverbrennung zusätzlich eine Oxidation von NO zu N02. Da NO2 besser als NO am Ag-haltigen Material gespeichert werden kann, führt dieses zu einer zusätzlichen Erhöhung der Beladungskapazität und der NOx-Durchbruchszeit. Somit kann auch in Gasen, die keinen oder nur einen sehr geringen HC-Anteil aufweisen, eine merkliche Erhöhung von Beladungskapazität und der NOx-Durchbruchszeit erreicht werden.

Oxidationskatalysator und NOx-Speicherkomponente können als räumlich separierte Elemente ausgebildet sein, die seriell im Abgasstrom angeordnet werden. Alternativ dazu können beide Komponenten in Schichten übereinander auf einem Träger angeordnet sein. Die untere Schicht bildet dabei die NOx-Speicherkomponente, die obere Schicht der Oxidationskatalysator.

Im Falle der räumlich separierten Anordnung ist das den Oxidationskatalysator verlassende Gas HC-frei, wodurch nach dem zuvor beschriebenen Effekt höhere NOx-Beladungen am Ag-haltigen Feststoff erzielbar sind. Im Falle der Schichtanordnung beider Feststoffe diffundiert das Reaktionsgas durch die den Oxidationskatalysator enthaltende Schicht, in der die Kohlenwasserstoffe verbrannt werden. Das HC-freie Gas tritt dann in die Schicht aus Ag-haltigem Feststoff ein, in der die Speicherung der Stickoxide erfolgt.

Der Ag-haltige Feststoff kann insbesondere elementares Ag, Ag20, Ag2C03, AgOH, Ag2S04 oder ein Gemisch aus mehreren dieser Verbindungen enthalten.

Der katalytisch wirkende Feststoff mit Oxidationseigenschaften kann z.B. ein Edelmetall wie Pt, Pd, Rh, Ir, Au, Ru oder Os oder ein Gemisch aus mehreren Edelmetallen enthalten.

Sowohl der Ag-haltige Feststoff als auch der katalytisch wirkende Feststoff sind vorteilhaft auf mikroporösen Trägersubstanzen (washcoat) aufgebracht, z.B. Al2O3, Ce02, La-haltiges Ce02, ZrO2, La-haltiges ZrO2, Si02, Ti02, Mg-Al-Mischoxid, Si-Al-Mischoxid, Zeolithe oder ein Gemisch aus mehreren dieser Verbindungen.

Ag-haltiger Feststoff und katalytisch wirkender Feststoff sind insbesondere auf keramischen oder metallischen Trägern aufgebracht.

Die erfindungsgemäße Anordnung aus Oxidationskatalysator und NOx-Speicherkomponente kann insbesondere einem NOx-Speicherkatalysator enthalten sein, wo es in Verbindung mit einem Dreiwegekatalysator zur Entstickung motorischer Abgase eingesetzt wird. Dabei werden in einer besonders vorteilhaften Ausführung die Stickoxide bei lambda- Werten des stickoxidhaitigen Gases> 1 in dem Ag-haltigen Feststoff gespeichert und bei lambda-Werten des Gases <= 1 an dem Ag-haltigen Feststoff wieder freigesetzt. Die freigesetzten Stickoxide werden an dem katalytischen Feststoff mit Dreiwegeeigenschaften zu Stickstoff umgesetzt.

Durch die Erfindung kann ein Beitrag zur Erfüllung zukünftiger Abgasgrenzwerte für Dieselmotoren sowie stöchiometrisch und magerbetriebenen Ottomotoren geleistet werden.

Die Erfindung wird anhand von Zeichnungen näher erläutert. Es zeigen:

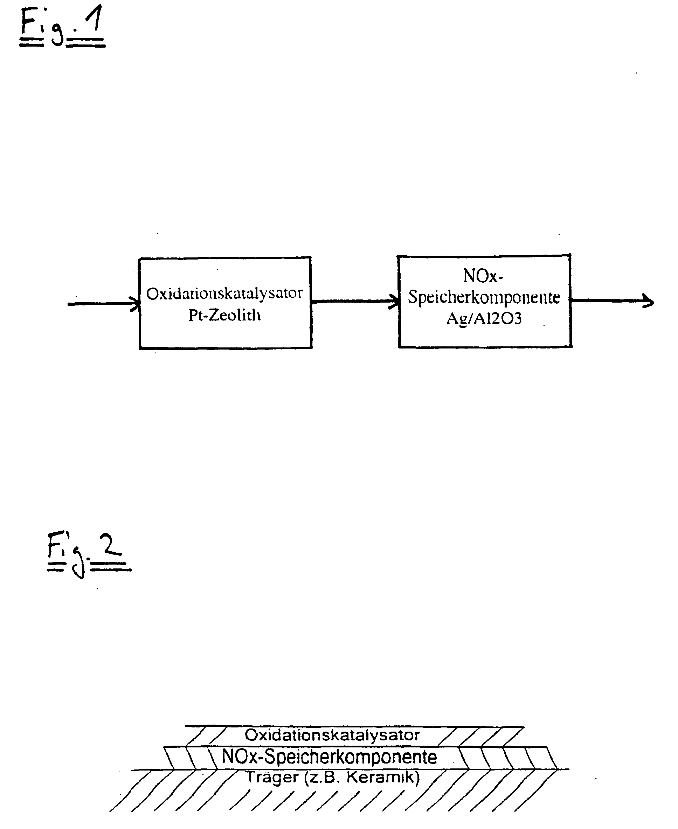

- Fig.1: eine erste Ausführung der erfindungsgemäßen Anordnung zur NOx-Speicherung;
- Fig.2: eine weitere Ausführung der erfindungsgemäßen Anordnung zur NOx-Speicherung

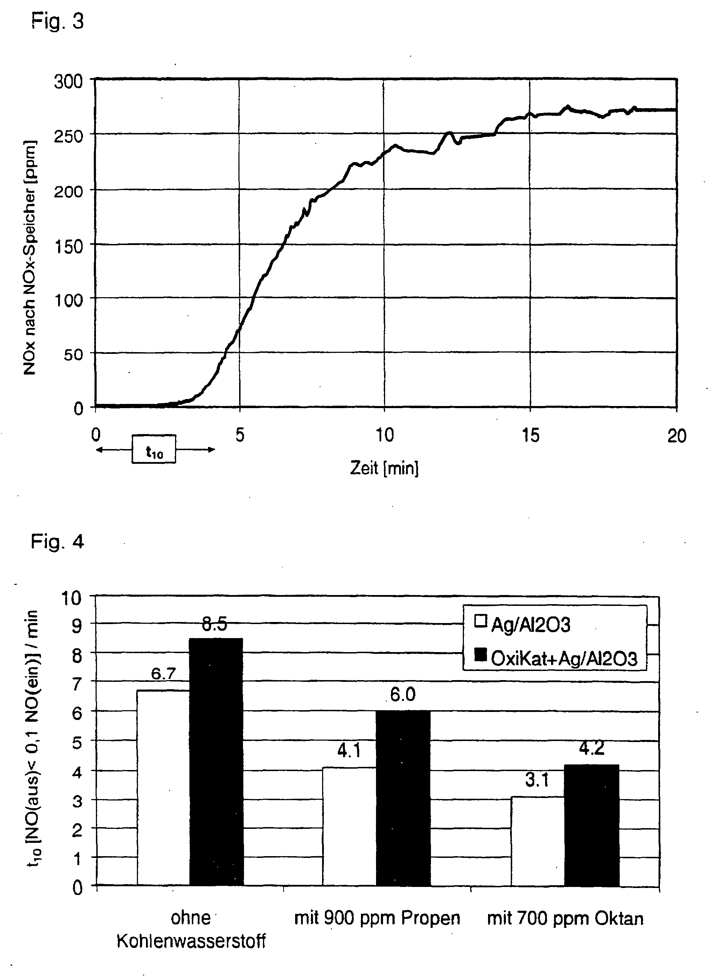

- Fig.3: den zeitlichen Verlauf der NOx-Konzentration nach NOx-Speicherkomponente für Ag/Al203 ohne erfindungsgemäßen Oxidationskatalysator in Anwesenheit von Propen (Reaktionsbedingungen: T(ein) = 350°C, RG 10.000 1/h, 270 Vol-ppm NO, 1000 Vol-ppm Propen, 10 Vol-% 02, 10 Vol-% H20, 10 Vol-% CO2, Rest N2);
- Fig.4: to₁₀-Zeiten tür Ag/Al2O3 allein (linke Spalte) und mit Oxidationskatalysator (rechte Spalte) jeweils ohne Kohlenwasserstoff (links) und in Anwesenheit von Propen (Mitte) und Oktan (rechts), Reaktionsbedingungen: T(ein) = 350°C, RG 10.000 1/h, 270-330 Vol-ppm NO, 900 Vol-ppm Propen bzw. 700 ppm Oktan, 10 Vol-% 02,10 Vol-% H20, 10 Vol-% C02, Rest N2;

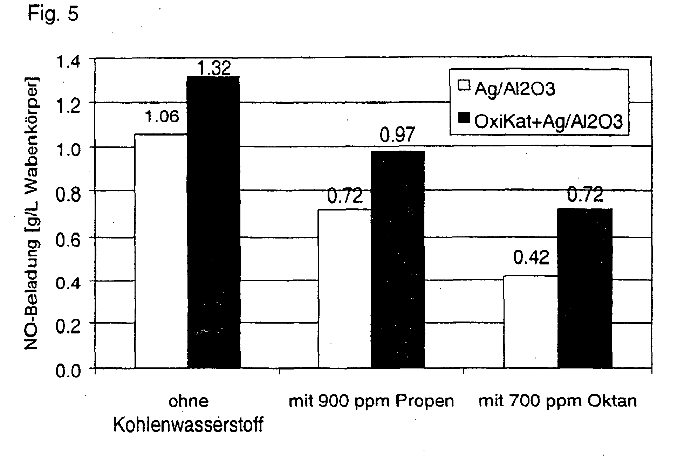

- Fig.5: Beladungskapazität für Ag/Al2O3 allein (linke Spalte) und mit Oxidationskatalysator (rechte Spalte) jeweils ohne Kohlenwasserstoff (links) und in Anwesenheit von Propen (Mitte) und Oktan (rechts), Reaktionsbedingungen: T(ein) = 350°C, RG 10.000 1/h, 270-330 Vol-ppm NO, 900 Vol-ppm Propen bzw. 700 ppm Oktan, 10 Vol-% 02, 10 Vol-% H20, 10 Vol-% C02, Rest N2.

Fig. 1 zeigt eine erste Ausführung der erfindungsgemäßen Anordnung zur NOx- Speicherung. Dabei sind Oxidationskatalysator und NOx-Speicherkomponente räumlich getrennt voneinander seriell im Abgasstrom angeordnet. Der Oxidationskatalysator kann z. B. ein Pt-haltiger Feststoff sein, der auf einem Zeolithmaterial als mikroporöser Trägersubstanz aufgebracht ist. Die stromabwärts angeordnete NOx-Speicherkomponente umfaßt den Ag-haltigen Feststoff, der zum Beispiel auf einer mikroporösen Trägersubstanz aus Al2O3 aufgebracht ist.

Fig. 2 zeigt eine weitere der erfindungsgemäßen Anordnung zur NOx- Speicherung. Hierbei sind Oxidationskatalysator und NOx-Speicherkomponente in übereinanderliegenden Schichten auf einem Träger, z.B. aus Keramik aufgebracht. Auch in dieser Ausführung sind der Ag-haltige Feststoff der NOx-Speicherkomponente und der katalytisch wirkende Feststoff mit Oxidationseigenschaften auf einer mikroporösen Trägersubstanz aufgebracht.

Im folgenden werden Ergebnisse von Versuchen beschrieben, bei denen die NO-Beladungskapazität sowie die Adsorptionsdauer (Zeitdauer bis zum beginnenden Durchdruch von NOx) der Stickoxide am Ag/ Ag/Al2O3 jeweils in An- und Abwesenheit eines Kohlenwasserstoffs (beispielhaft: Propen und Oktan) bestimmt wurden. In weiteren Versuchen wurde der NOx-Speicherkomponente in erfindungsgemäßer Weise ein Pt-haltiger Oxidationskatalysator (Pt/Zeolith) vorgeschaltet. Das NOx-Speichermaterial und der Oxidations katalysator lagen dabei beschichtet auf keramischen Wabenkörpern vor. Der Ag-Gehalt der Speicherkomponente betrug 40 ma-% (bezogen auf die Gesamtmasse [Ag+Al2O3]). Der Pt-Gehalt des Oxidationskatalysators betrug 7,5 ma-% (bezogen auf die Gesamtmasse [Pt+Zeolith]).

In Fig. 3 ist zunächst ein beispielhafter Verlauf der NOx-Konzentration am Ausgang der NOx-Speicherkomponente während des Beladungsvorganges für Ag/Al2O3 ohne erfindungsgemäßen Oxidationskatalysator gezeigt. In einer anfänglichen Phase, in der die Ausgangskonzentration annähernd Null beträgt, wird eine Totaladsorption der Stickoxide beobachtet. Nach ca. 3 Minuten beginnt dann am Reaktorausgang der Durchbruch der Stickoxide, der mit einem entsprechenden Anstieg der Konzentration verbunden ist. Die Zeit, nach der die NOx-Ausgangskonzentration 10 % des Eingangswertes erreicht, wird dabei im folgenden als t₁₀-Wert bezeichnet. Für die Anwendung des NOx-Speichermaterials als Komponente von NOx-Speicherkatalysatoren im motorischen Abgas wird ein hoher t₁₀-Wert angestrebt. Er hängt sowohl vom Speichermaterial als auch von den vorherrschenden Reaktionsbedingungen (z.B. Raumgeschwindigkeit, NOx-Konzentration) ab. In der dargestellten Kurve beträgt der t₁₀-Wert 4,1 Minuten. Nach dieser Zeit erreicht die NOx-Ausgangskonzentration ca. 27 ppm (= 10 % der Eingangskonzentration von 270 ppm).

Die zweite wichtige Größe, die die Qualität des Speichermaterials kennzeichnet, ist neben dem t₁₀-Wert die NO-Beladungskapazität. Sie wird als Differenz der zugespeisten zur austretenden NOx-Menge ermittelt und in Gramm NO pro Liter Wabenkörpervolumen angegeben. Mit dem beschriebenen Ag/Al2O3-Speichermaterial wird unter den genannten Bedingungen eine NO-Beladungskapazität von 0,72 gNO pro Liter Wabenkörper erzielt.

Im folgenden werden vergleichend die t₁₀-Werte und die NO-Beladungskapazitäten für Ag/Al2O3 allein, d.h. ohne Oxidationskatalysator und gemäß dem erfindungsgemäßen Verfahren, bei dem dem Ag-/Al2O3-Speicher ein Oxidationskatalysator (OxiKat) vorgeschaltet ist, dargestellt. Als Oxidationskatalysator wurde dabei ein Pt/Zeolith-Katalysator eingesetzt.

In Fig. 4 sind die t₁₀-Werte dargestellt. Der negative Einfluß des Kohlenwasserstoffs ist deutlich zu erkennen. Die t₁₀-Werte betragen 4,1 Minuten und 3,1 Minuten bei Verwendung von Propen (900 ppm) und Oktan (700 ppm) gegenüber 6,7 Minuten in kohlenwasserstofffreier Atmosphäre. Durch erfindungsgemäßes Vorschalten des Oxidationskatalystors kann nun im Falle des Propen die t₁₀-Phase auf 6,0 Minuten (+46%) und im Falle von Oktan auf 4,2 Minuten (+35%) erhöht werden. Auch in kohlenwasserstofffreier Atmosphäre kann die t₁₀-Phase durch Vorschalten des Oxidationskatalysators von 6,7 auf 8,5 Minuten erhöht werden. Dieses ist - wie oben beschrieben - auf die Oxidation von NO zu NO2 am Platin, die ebenfalls eine verbesserte Speicherung bewirkt, zurückzuführen.

In Fig. 5 sind die NO-Beladungskapazitäten für beide Verfahrensvarianten und unterschiedliche Kohlenwasserstoffatmosphären dargestellt. Es ist die gleiche Tendenz feststellbar, wie sie bei den t₁₀-Werten beobachtet wird. Die Anwesenheit eines Kohlenwasserstoffs führt zu deutlich verminderten Beladungskapazitäten. In kohlenwasserstofffreier Atmosphäre wird eine NO-Beladungskapazität von 1,06 gNO pro Liter Wabenkörper erzielt. Dagegen beträgt diese in Anwesenheit von 900 ppm Propen nur noch 0,72 g/Liter, in Anwesenheit von 700 ppm Oktan nur noch 0,42 g/Liter. Durch erfindungsgemäßes Vorschalten eines Oxidationskatalysators kann im Falle von Propen die Beladungskapazität auf 0,97 g/Liter erhöht werden (+35%). Bei Oktan als Kohlenwasserstoff wird die NO-Beladung auf 0,72 g/Liter erhöht (+71%). Das Vorschalten des Oxidationskatalysators bewirkt aus dem zuvor beschriebenen Grund auch in kohlenwasserstofffreier Atmosphäre eine Erhöhung der Beladungskapazität.

### In der Beschreibung zitierte Stand der Technik

/1/ Shin'ichi Matsumoto, Catal. Today, 29 (1996) 43
/2/ W. Boegner, M. Kraemer, B. Krutzsch, S. Pischinger, D. Voigtländer, G. Wenninger, F. Wirbeleit, M.S. Brogan, R. J. Brisley et al., Appl. Catal., B7 (1995) Nr. 1-2, S. 153-171
/3/ EP 0 890 389

## Patentansprüche

1. Verfahren zur Speicherung von in einem Gas enthaltenen Stickoxiden, wobei die Stickoxide an einem Ag-haltigen Feststoff gespeichert werden, **dadurch gekennzeichnet, dass** dem Ag-haltigen Feststoff ein katalytisch wirkender Feststoff mit Oxidationseigenschaften vorgeschaltet ist, so dass das Gas vor dem Zutritt in den Ag-haltigen Feststoff im wesentlichen HC-frei ist.

2. Anordnung zur Speicherung von in einem Gas enthaltenen Stickoxiden, mit einem Ag-haltigen Feststoff als Speichermaterial für die Stickoxide, **dadurch gekennzeichnet, dass** ein zusätzlich vorgeschalteter katalytisch wirkender Feststoff mit Oxidationseigenschaften die Bestandteile des Gases soweit oxidiert, dass das Gas vor dem Zutritt in den Ag-haltigen Feststoff im wesentlichen HC-frei ist.

3. Anordnung nach Anspruch 2,
**dadurch gekennzeichnet, dass** der katalytisch wirkende Feststoff in Schichtform auf den Ag-haltigen Feststoff aufgebracht ist.

4. Anordnung nach Anspruch 2,
**dadurch gekennzeichnet, dass** der katalytisch wirkende Feststoff als separate Komponente räumlich getrennt vom Ag-haltigen Feststoff angeordnet ist.

5. Anordnung nach einem der Ansprüche 2 bis 4,
**dadurch gekennzeichnet, dass** der Ag-haltige Feststoff elementares Ag oder Ag₂O oder Ag₂CO₃ oder AgOH oder Ag₂SO₄ oder ein Gemisch aus mehreren dieser Verbindungen enthält.

6. Anordnung nach einem der vorangehenden Ansprüche 2 bis 5, **dadurch gekennzeichnet, dass** der katalytisch wirkende Feststoff mit Oxidationseigenschaften ein Edelmetall, z.B. Pt, Pd, Rh, Ir, Au, Ru oder Os oder ein Gemisch aus mehreren Edelmetallen enthält.

7. Anordnung nach einem der vorangehenden Ansprüchen 2 bis 6, **dadurch gekennzeichnet, dass** der Ag-haltige Feststoff und/oder der katalytisch wirkende Feststoff jeweils auf mikroporösen Trägersubstanzen aufgebracht sind, z.B. Al₂O₃, CeO₂, La-haltiges CeO₂, ZrO₂, La-haltiges ZrO₂, SiO₂, TiO₂, Mg-Al- Mischoxid, Si-Al-Mischoxid, Zeolithe oder ein Gemisch aus mehreren dieser Verbindungen.

8. Verwendung einer Anordnung nach einem der vorangehenden Ansprüche 2 bis 7 in Verbindung mit einem katalytischen Feststoff mit Dreiwegeeigenschaften zur Entstickung motorischer Abgase.

9. Verwendung nach Anspruch 8,
**dadurch gekennzeichnet, dass** die Stickoxide bei lambda-Werten des stickoxidhaltigen Gases > 1 in dem Ag-haltigen Feststoff gespeichert werden und bei lambda-Werten des Gases < = 1 an dem Ag-haltigen Feststoff freigesetzt werden und an dem katalytischen Feststoff mit Dreiwegeeigenschaften zu Stickstoff umgesetzt werden.

## Claims

1. Method for storing nitrogen oxides contained in a gas, the nitrogen oxides being stored at an Ag-containing solid, **characterized in that** a catalytically active solid with oxidation properties is connected upstream of the Ag-containing solid, so that the gas is substantially HC-free before it enters the Ag-containing solid.

2. Arrangement for storing nitrogen oxides contained in a gas, having an Ag-containing solid as storage material for the nitrogen oxides, **characterized in that** an additional, upstream, catalytically active solid with oxidation properties oxidizes the constituents of the gas sufficiently for the gas to be substantially HC-free before it enters the Ag-containing solid.

3. Arrangement according to Claim 2, **characterized in that** the catalytically active solid is applied to the Ag-containing solid in layer form.

4. Arrangement according to Claim 2, **characterized in that** the catalytically active solid is arranged as a separate component which is spatially apart from the Ag-containing solid.

5. Arrangement according to one of Claims 2 to 4, **characterized in that** the Ag-containing solid contains elemental Ag or Ag₂O or Ag₂CO₃ or AgOH or Ag₂SO₄ or a mixture of a plurality of these compounds.

6. Arrangement according to one of the preceding Claims 2 to 5, **characterized in that** the catalytically active solid with oxidation properties contains a precious metal, e.g. Pt, Pd, Rh, Ir, Au, Ru or Os or a mixture of a plurality of precious metals.

7. Arrangement according to one of the preceding Claims 2 to 6, **characterized in that** the Ag-containing solid and/or the catalytically active solid are in each case applied to microporous support substances, e.g. Al₂O₃, CeO₂, La-containing CeO₂, ZrO₂, La-containing ZrO₂, SiO₂, TiO₂, Mg-Al mixed oxide, Si-Al mixed oxide, zeolites or a mixture of a plurality of these compounds.

8. Use of an arrangement according to one of the preceding Claims 2 to 7 in combination with a catalytic solid with three-way properties for deNOxing engine exhaust gases.

9. Use according to Claim 8, **characterized in that** the nitrogen oxides are stored in the Ag-containing solid at lambda values of the nitrogen oxide-containing gas of > 1 and are released at the Ag-containing solid at lambda values of the gas of ≤ 1 and then converted into nitrogen at the catalytic solid with three-way properties.

## Revendications

1. Procédé pour l'accumulation d'oxydes d'azote contenus dans un gaz, les oxydes d'azote étant accumulés sur un solide qui contient de l'Ag, **caractérisé en ce qu'**un solide à action catalytique et propriétés oxydantes est placé en amont du solide qui contient de l'Ag de telle sorte que le gaz est essentiellement débarrassé des HC avant de pénétrer dans le solide qui contient de l'Ag.

2. Agencement pour l'accumulation d'oxydes d'azote contenus dans un gaz, avec comme matériau accumulant les oxydes d'azote un solide qui contient de l'Ag, **caractérisé en ce qu'**un solide supplémentaire à action catalytique et propriétés oxydantes placé en amont oxyde les composants du gaz jusqu'à ce que le gaz soit essentiellement débarrassé des HC avant de pénétrer dans le solide qui contient de l'Ag.

3. Agencement selon la revendication 2, **caractérisé en ce que** le solide à action catalytique est appliqué en couche sur le solide qui contient de l'Ag.

4. Agencement selon la revendication 2, **caractérisé en ce que** le solide à action catalytique est un composant distinct séparé spatialement du solide qui contient de l'Ag.

5. Agencement selon l'une quelconque des revendications 2 à 4, **caractérisé en ce que** le solide qui contient de l'Ag contient de l'Ag élémentaire, de l'Ag₂O, de l'Ag₂CO₃, de l'AgOH, de l'Ag₂SO₄ ou un mélange de plusieurs de ces composés.

6. Agencement selon l'une quelconque des revendications 2 à 5 qui précèdent, **caractérisé en ce que** le solide à action catalytique et propriétés oxydantes contient un métal noble, par exemple Pt, Pd, Rh, Ir, Au, Ru, Os ou un mélange de ces métaux nobles.

7. Agencement selon l'une quelconque des revendications 2 à 6 qui précèdent, **caractérisé en ce que** le solide qui contient de l'Ag et/ou le solide à action catalytique sont placés sur des substances poreuses de support respectives, par exemple de l'Al₂O₃, du CeO₂, du CeO₂ qui contient du La, du ZrO₂, du ZrO₂ qui contient du La, du SiO₂, du TiO₂, un oxyde mixte de Mg et Al, un oxyde mixte de Si et Al, des zéolithes ou un mélange de plusieurs de ces composés.

8. Utilisation d'un agencement selon l'une quelconque des revendications 2 à 7 qui précèdent en association avec un solide catalytique à propriétés trois voies pour l'épuration de l'azote des gaz d'échappement de moteurs.

9. Utilisation selon la revendication 8, **caractérisée en ce que** les oxydes d'azote sont accumulés dans le solide qui contient de l'Ag lorsque le facteur lambda du gaz qui contient de l'azote est > 1 et sont libérés du solide qui contient de l'azote lorsque le facteur lambda du gaz est ≤ 1, pour être convertis en azote sur le solide catalytique à propriétés trois voies.
